# EUROPÄISCHE PATENTANMELDUNG

(11) **EP 3 878 340 A1**
(43) Veröffentlichungstag der Anmeldung: **15.09.2021**
(21) Anmeldenummer: 21160257.8
(22) Anmeldetag: 02.03.2021
(51) Int. Cl.: A47L 15/00, A47L 15/24

(54) **SPÜLMASCHINE ZUM REINIGEN VON SPÜLGUTTEILEN IN GESTALT VON TRINKGEFÄSSEN**

(30) Priorität: 12.03.2020 DE 102020106839
(71) Anmelder: Illinois Tool Works, Inc., Glenview, Illinois 60025 (US)
(72) Erfinder: DISCH, Harald, Glenview, Illinois, 60025 (US); SCHREMPP, Martin, Glenview, Illinois, 60025 (US); BOLDT, Adrian, Glenview, Illinois, 60025 (US); FRANZ, Benjamin, Glenview, Illinois, 60025 (US); WERNER, Roland, Glenview, Illinois, 60025 (US); REINHART, David, Glenview, Illinois, 60025 (US); BRODOWSKI, Björn, 77749 Hohberg (DE)
(74) Vertreter: Trinks, Ole

(57) **Zusammenfassung**

Die Erfindung betrifft eine Spülmaschine (1) zum Reinigen von Trinkgefäßen, wobei die Spülmaschine (1) eine Behandlungszone (3) und eine Transportvorrichtung (6) zum Transportieren der zu reinigenden Spülgutteile (2) von einem Einstellbereich (4) der Spülmaschine (1) durch die Behandlungszone (3) zu einem Entnahmebereich (5) der Spülmaschine (1) aufweist. Die Transportvorrichtung (6) ist ausgebildet ist, eine vorab festgelegte oder festlegbare Gruppe von zu reinigenden Spülgutteilen (2) chargenweise von dem Einstellbereich (4) durch die Behandlungszone (3) zu transportieren und dann die Gruppe von Spülgutteilen (2) als gereinigte Spülgutteile (2) dem Entnahmebereich (5) zuzuführen.

## Beschreibung

Die vorliegende Erfindung betrifft allgemein das Fachgebiet des gewerblichen Spülens und im Einzelnen eine Spülmaschine gemäß dem Oberbegriff des unabhängigen Patentanspruchs 1.

Demgemäß betrifft die Erfindung insbesondere eine Spülmaschine zum Reinigen von Spülgutteilen in Gestalt von Trinkgefäßen, insbesondere in Gestalt von Trinkbechern, Tassen, Gläsern oder Flaschen, wobei die Spülmaschine mindestens eine Behandlungszone und mindestens eine Transportvorrichtung zum Transportieren der zu reinigenden Spülgutteile von einem Einstellbereich der Spülmaschine durch die mindestens eine Behandlungszone der Spülmaschine zu einem Entnahmebereich der Spülmaschine aufweist.

Bei dem Einstellbereich der Spülmaschine handelt es sich insbesondere um den schmutzseitigen Eingabebereich, welcher ausgebildet ist, dass das in der mindestens einen Behandlungszone der Spülmaschine zu reinigende Spülgut dort manuell eingegeben werden kann. Andererseits ist der Entnahmebereich der Spülmaschine insbesondere der reinseitige Ausgabebereich, welcher ausgebildet ist, das in der mindestens einen Behandlungszone der Spülmaschine gereinigte Spülgut auszugeben, damit dieses manuell entnommen werden kann.

Spülmaschinen mit einer derartigen Transportvorrichtung finden üblicherweise im gewerblichen Bereich Anwendung. Im Gegensatz zu Haushaltsspülmaschinen, bei welchen das zu reinigende Spülgut während der Reinigung ortsfest in der Spülmaschine verbleibt, findet bei solchen Transportspülmaschinen ein Transport des Spülguts durch verschiedene Behandlungszonen der Maschine statt.

Eine Transportspülmaschine der zuvor genannten Art ist beispielsweise aus der Druckschrift DE 19 644 438 A1 bekannt. Diese Transportspülmaschine weist in Transportrichtung des Spülguts gesehen nacheinander eine Vorabräumzone mit Vorabräumdüsen zum Entfernen von groben Verschmutzungen auf dem Spülgut, mindestens eine Waschzone mit Waschdüsen zum Sprühen von Waschflüssigkeit auf das Spülgut, eine Vorspülzone mit Vorspüldüsen und eine Frischwasser-Klarspülzone mit Klarspüldüsen auf. Die Klarspüldüsen sprühen Klarspülflüssigkeit, insbesondere Frischwasser, auf das Spülgut. Die versprühte Klarspülflüssigkeit gelangt in einen Vorspültank, aus welchem sie mittels einer Pumpenleitung zu den Vorspüldüsen gefördert wird. Die von den Vorspüldüsen versprühte Vorspülflüssigkeit fließt in den Vorspültank zurück. Ein Teil der von den Vorspüldüsen versprühten Vorspülflüssigkeit wird durch ein Ablenkblech in den Waschtank der letzten Waschzone geleitet. Durch ein Flüssigkeitskaskadensystem kann Flüssigkeit entgegen der Spülguttransportrichtung vom Vorspültank in den letzten Waschtank und von diesem weiter bis zu einem Tank fließen, welcher die von den Vorabräumdüsen in der Vorabräumzone versprühte Flüssigkeit auffängt.

Dadurch, dass bei Transportspülmaschinen ein Transport des Spülguts durch verschiedene Behandlungszonen (insbesondere Waschzonen und Klarspülzonen) der Maschine stattfindet, ist - im Unterschied zu den Batch-Prozessen von stationären Programmautomaten, wie etwa Haushaltsspülmaschinen oder Untertischmaschinen - ein kontinuierlicher Betrieb möglich. Der Nachteil von Transportspülmaschinen ist jedoch in dem relativ große Platzbedarf im Aufstellraum (Waschküche) zu sehen.

Allerdings besteht zunehmender Bedarf darin, die Vorteile einer Transportspülmaschine bei Anwendungen zu nutzen, bei denen nur eine geringe Aufstellfläche zur Verfügung steht.

So stehen heutzutage in Hotels, Betriebskantinen, öffentlichen Gebäuden, Krankenhäusern, Schulen und Raststätten fast immer Heißgetränkeautomaten, insbesondere Kaffeeautomaten unterschiedlicher Modelle und Größen zur Selbstbedienung bereit. In der Regel sind diese Heißgetränkeautomaten ausgebildet, um Tassen mit einem ausgewählten Heißgetränk zu befüllen, wobei allerdings bei Automatenaufstellungen in Betrieben oder öffentlichen Gebäuden auch Kunststoffbecher zum Einsatz kommen.

Andererseits nimmt der Einsatz von Kunststoffbechern aufgrund des ökologischen Aspekts zunehmend ab, und zwar zu Gunsten von wiederverwendbarem Geschirr (Gläser, Tassen, etc.).

Um die Tassen, Gläser, etc. (nachfolgend auch als "Trinkgefäß" bezeichnet) nach Gebrauch zu reinigen, wird in der Regel eine übliche gewerbliche Spülmaschine verwendet. Dazu werden die schmutzigen Spülgutteile gesammelt, zur Spülmaschine transportiert, wobei die Spülmaschine üblicherweise nicht direkt in der Nähe des Heißgetränkeautomaten steht, dort gereinigt und dann wieder zu der Heißgetränkestation bzw. dem Heißgetränkeautomaten zurückgebracht.

Demnach bereitet ein Wechsel der Heißgetränkeautomaten von Wegwerfgeschirr auf wiederverwendbares Geschirr Probleme im Hinblick auf die bereitzustellende Logistik insbesondere in Gestalt von Arbeitskräften zur Durchführung der einzelnen Prozessschritte, was das Einsammeln des verschmutzten, wiederverwendbaren Geschirrs, das Befüllen einer üblicherweise extern vorgesehenen Spülmaschine und das Wiederbereitstellen des gereinigten Geschirrs an dem Heißgetränkeautomaten angeht.

Das Vorsehen einer aus dem Stand der Technik bekannten, herkömmlichen Transportspülmaschine in unmittelbarer Nähe eines Heißgetränkeautomatens ist nicht möglich, da derartige Transportspülmaschinen einen relativ großen Platzbedarf im Aufstellraum (Waschküche) benötigen, der in der Regel nicht in der Nähe von Heißgetränkeautomaten zu finden ist.

Von daher liegt der Erfindung die Aufgabe zu Grunde, eine Spülmaschine der eingangs genannten Art dahingehend weiterzubilden, dass diese einen besonders kompakten Aufbau aufweist, damit die Spülmaschine auch bei Anwendungen eingesetzt werden kann, bei denen aufgrund einer nicht verfügbaren Aufstellfläche herkömmliche Transportspülmaschinen nicht verwendet werden können.

Diese Aufgabe wird erfindungsgemäß durch eine Spülmaschine gemäß dem unabhängigen Patentanspruch 1 gelöst, wobei vorteilhafte Weiterbildungen der Spülmaschine in den abhängigen Ansprüchen angegeben sind.

Demgemäß betrifft die Erfindung insbesondere eine Spülmaschine zum Reinigen von Spülgutteilen in Gestalt von Trinkgefäßen, wobei die Spülmaschine mindestens eine Behandlungszone und mindestens eine Transportvorrichtung zum Transportieren der zu reinigenden Spülgutteile von einem Einstellbereich der Spülmaschine durch die mindestens eine Behandlungszone der Spülmaschine zu einem Entnahmebereich der Spülmaschine aufweist.

Erfindungsgemäß ist dabei insbesondere vorgesehen, dass die Transportvorrichtung ausgebildet ist, eine vorab festgelegte oder festlegbare Gruppe von zu reinigenden Spülgutteilen chargenweise von dem Einstellbereich durch die mindestens eine Behandlungszone zu transportieren und dann die Gruppe von Spülgutteilen als gereinigte Spülgutteile dem Entnahmebereich zuzuführen.

Alternativ hierzu ist die Transportvorrichtung ausgebildet, die zu reinigenden Spülgutteile vereinzelt von dem Einstellbereich durch die mindestens eine Behandlungszone zu transportieren und dann dem Entnahmebereich als gereinigtes Spülgutteil zuzuführen.

Die mit der erfindungsgemäßen Spülmaschine erzielbaren Vorteile liegen auf der Hand: die erfindungsgemäße Spülmaschine erlaubt es, wahlweise das aufgegebene Spülgut individuell zu reinigen, so dass sich die Spülmaschine insbesondere zum Reinigen von Mehrweg-Trinkgefäßen, wie beispielsweise Kaffeetassen, eignet, wobei die Maschine direkt an einem Getränkeautomaten, insbesondere Heißgetränkeautomaten, oder in unmittelbarer Nähe zu einem Getränkeautomaten, insbesondere Heißgetränkeautomaten, aufgestellt werden kann.

Derzeit sind Getränkeautomaten, insbesondere Heißgetränkeautomaten, in der Regel mit einer Einrichtung zur Ausgabe von Einweg-Behältern versehen, die nach dem Gebrauch als Abfall anfallen bzw. nach Inkrafttreten gesetzlicher Bestimmungen der Rücknahmepflicht unterliegen.

Ferner gibt es Getränkeautomaten, die keine Behälter bereitstellen oder ausgeben, und bei denen der Benutzer eine eigene Tasse oder dergleichen verwendet, die er nach Gebrauch selbst reinigt. Damit wird unnötig viel Frischwasser verbraucht, wenn der Benutzer nicht bewusst sparsam damit umgeht. Dementsprechend fällt auch unnötig viel Abwasser an und außerdem werden Papierhandtücher oder dergleichen zum Trocknen der eigenen Mehrweg-Behälter benötigt, die wiederrum als Abfall anfallen.

Durch den kompakten Aufbau der erfindungsgemäßen Transportspülmaschine eignet sich diese insbesondere auch als Mehrweg-Trinkgefäß-Spülmaschine, wie beispielsweise Kaffeetassen-Spülmaschine, die in der direkten Umgebung des Heißgetränkeautomaten/der Kaffeemaschine ausgestellt werden kann oder sogar teilintegraler Bestandteil des Heißgetränkeautomaten ist.

Die Transportspülmaschine weist einen Eingabebereich auf, in den das verschmutzte Spülgut (insbesondere Trinkgefäß) eingestellt wird. Darüber hinaus weist die Transportspülmaschine einen von dem Eingabebereich räumlich getrennten Ausgabebereich auf, wo das saubere Spülgut entnommen werden kann.

Das Spülgut (Trinkgefäße wie Tassen, Gläser etc.) kann vereinzelt (d.h. eins nach dem anderen) aufgegeben werden und ebenso entnommen werden; allerdings ist grundsätzlich aber auch eine Beladung in kleineren Gruppen möglich.

Insbesondere handelt es bei der erfindungsgemäßen Spülmaschine um eine Art Hybrid-Spülmaschine, bei welcher die Technologie von stationären Programmautomaten für Batch-Prozesse mit der Technologie von Transportspülmaschinen, die für einen kontinuierlichen Betrieb ausgebildet sind, kombiniert werden. Einerseits bietet die erfindungsgemäße Spülmaschine den Vorteil der stationären Programmautomaten, die auf einen Batch-Prozess ausgelegt sind, während andererseits ebenfalls der Vorteil von Transportspülmaschinen verwendet wird. Der Platzbedarf zum Aufstellen der erfindungsgemäßen Spülmaschine entspricht maximal dem Platzbedarf einer als stationären Programmautomat ausgebildeten Spülmaschine, wobei gleichzeitig ein kontinuierlicher Betrieb der Spülmaschine, wie es bei Transportspülmaschinen bekannt und dort als Vorteil zu nennen ist, ermöglicht wird.

Insbesondere ist es in diesem Zusammenhang denkbar, dass die Transportvorrichtung ausgebildet ist, wahlweise entweder eine vorab festgelegte Gruppe von zu reinigenden Spülgutteilen chargenweise von dem Einstellbereich durch die mindestens eine Behandlungszone zu transportieren und dann die Gruppe von Spülgutteilen als gereinigte Spülgutteile dem Entnahmebereich zuzuführen, oder die zu reinigenden Spülgutteile vereinzelt von dem Einstellbereich durch die mindestens eine Behandlungszone zu transportieren und dann dem Entnahmebereich als gereinigtes Spülgutteil zuzuführen. Auf diese ist insbesondere ein individualisiertes Behandeln und ein individualisiertes Zuführen der behandelten Spülgutteile zum Entnahmebereich möglich.

Mit anderen Worten, ein Benutzer der Spülmaschine kann seine persönliche Tasse in den Einstellbereich der Spülmaschine aufgeben, wobei sichergestellt ist, dass diese persönliche Tasse auch als solche erkennbar am Entnahmebereich ausgegeben wird.

Die Spülmaschine eignet sich insbesondere somit für Kaffeeshops, bei denen die Kunden ihre eigene Tasse mit bringen, wobei diese Tasse jedoch vor dem Befüllen beispielsweise mit einem Heißgetränk noch vor Ort gereinigt werden müssen. Dann kann die zu reinigende Tasse vereinzelt von dem Einstellbereich durch die Behandlungszone transportiert und dann dem Entnahmebereich zugeführt werden.

Andererseits eignet sich die Spülmaschine auch für Situationen, bei denen gleichzeitig mehrere Spülgutteile gereinigt werden müssen, wie es beispielsweise dann der Fall ist, wenn Spülgut anfällt, welches nicht zu individualisieren ist. In diesem Fall können die zu reinigenden Spülgutteile chargenweise durch die Behandlungszone als Gruppe geleitet werden.

In einer denkbaren Realisierung der erfindungsgemäßen Lösung ist vorgesehen, dass die Transportvorrichtung der Spülmaschine mindestens eine Transportspur, insbesondere in Gestalt eines Transportbands, aufweist, wobei diese mindestens eine Transportspur ausgebildet ist, die Spülgutteile vereinzelt durch die mindestens eine Behandlungskammer der Spülmaschine zu führen. Denkbar ist in diesem Zusammenhang insbesondere, dass die Breite der Transportspur entsprechend schmal gewählt ist. In einer bevorzugten Realisierung der erfindungsgemäßen Spülmaschine weist die mindestens eine Transportspur somit eine effektive Breite von vorzugsweise maximal 30 cm und vorzugsweise von maximal 15 cm auf.

Insbesondere für größere Kaffeeshops ist es von Vorteil, wenn die Transportvorrichtung mindestens zwei parallel zueinander verlaufende Transportspuren, insbesondere jeweils in Gestalt eines Transportbands, aufweist. Damit jede dieser beiden Transportspuren vereinzelt die Spülgutteile durch die mindestens eine Behandlungszone transportieren kann, sollte eine entsprechend (geringe) Breite der Transportspuren gewählt werden, wobei sich insbesondere eine effektive Breite von maximal 30 cm und vorzugsweise maximal 15 cm aufweist.

Um wahlweise entweder chargenweise Gruppen von Spülgutteilen durch die mindestens eine Behandlungszone oder Spülgutteile vereinzelt durch die mindestens eine Behandlungszone transportieren zu können, ist gemäß einer Weiterbildung der erfindungsgemäßen Spülmaschine vorgesehen, dass die Transportvorrichtung eine erste Transportspur, insbesondere in Gestalt eines Transportbands, und mindestens eine zweite Transportspur, insbesondere in Gestalt eines Transportbands, aufweist, wobei die erste Transportspur individualisierten Spülgutteilen zugeordnet ist und wobei die mindestens eine zweite Transportspur sonstigen Spülgutteilen zugeordnet ist. Dabei ist die erste Transportspur ausgebildet, die von ihr durch die mindestens eine Behandlungszone der Spülmaschine transportierten Spülgutteile im Entnahmebereich der Spülmaschine insbesondere räumlich separiert von dem mit der mindestens einen zweiten Transportspur durch die mindestens eine Behandlungszone der Spülmaschine transportierten Spülgutteile auszugeben.

Gemäß Ausführungsformen der erfindungsgemäßen Lösung weist die Spülmaschine eine Steuereinrichtung auf, welche ausgebildet ist, die mindestens eine Transportvorrichtung derart anzusteuern, dass mit der mindestens einen Transportvorrichtung die zu reinigenden Spülgutteile diskontinuierlich von dem Einstellbereich der Spülmaschine durch die mindestens eine Behandlungszone zu dem Entnahmebereich der Spülmaschine transportiert werden.

"Diskontinuierlich" bedeutet in diesem Zusammenhang, dass mit Hilfe der Transportvorrichtung beispielsweise die zu reinigenden Spülgutteile von dem Einstellbereich in die mindestens eine Behandlungszone transportiert werden, wobei dann die Transportvorrichtung stoppt und die Spülgutteile ortsfest in der Behandlungszone gereinigt (Waschphase und Klarspülphase bzw. optional anschließende Trocknungsphase) gereinigt werden, wobei danach mit Hilfe der Transportvorrichtung das gereinigte Spülgut zum Entnahmebereich transportiert wird. Indem in ein und derselben Behandlungszone zeitlich gesehen nacheinander verschiedene Behandlungen durchgeführt werden, reduziert sich der Platzbedarf der Spülmaschine.

Alternativ hierzu ist es selbstverständlich aber auch denkbar, dass die Spülmaschine eine Steuereinrichtung aufweist, welche ausgebildet ist, die mindestens eine Transportvorrichtung derart anzusteuern, dass mit der mindestens einen Transportvorrichtung die zu reinigenden Spülgutteile kontinuierlich und insbesondere mit einer vorab festgelegten oder festlegbaren Transportgeschwindigkeit durch die mindestens eine Behandlungszone transportiert werden. In diesem Zusammenhang bietet es sich an, mindestens zwei Behandlungszonen in Transportrichtung der Spülgutteile gesehen nacheinander anzuordnen.

Gemäß einem weiteren Aspekt der vorliegenden Erfindung ist die Spülmaschine ausgebildet, ein in den Einstellbereich der Spülmaschine eingegebenes und in der mindestens einen Behandlungszone der Spülmaschine behandeltes Spülgutteil im Entnahmebereich der Spülmaschine derart individualisiert auszugeben, dass das in der mindestens einen Behandlungszone behandelte Spülgutteil eindeutig einem Individuum zuortbar ist. Dieses Merkmal ist insbesondere dann hilfreich, wenn die Spülmaschine in einem Kaffeeshop verwendet wird, bei welchem die Kunden ihre eigenen Becher oder anderen Trinkgefäße mitbringen können.

Zur Realisierung dieser Ausführungsform ist es denkbar, dass die Spülmaschine vorzugsweise im oder beim Einstellbereich ein System zur Spülgutidentifizierung aufweist, wobei das System zur Spülgutidentifizierung ausgebildet ist, einem Spülgutteil in oder beim Einstellbereich einen Identifikator zuzuordnen, welcher eine eindeutige Identifizierung des in dem Einstellbereich aufgegebenen Spülgutteils im Entnahmebereich der Spülmaschine erlaubt.

In diesem Zusammenhang ist es denkbar, dass die Spülmaschine vorzugsweise im oder beim Einstellbereich ein System zur Spülgutidentifizierung aufweist, wobei das System zur Spülgutidentifizierung ausgebildet ist, einem Spülgutteil im oder beim Einstellbereich einen Identifikator zuzuordnen, welcher eine eindeutige Identifizierung des in den Einstellbereich aufgegeben Spülgutteils im Entnahmebereich der Spülmaschine erlaubt.

Für das System zur Spülgutidentifizierung kommen unterschiedliche Lösungen in Frage. Beispielsweise kann das System zur Spülgutidentifizierung eine RFID-Einrichtung zum vorzugsweise automatischen und berührungslosen Identifizieren eines Spülgutteils vorzugsweise im Einstellbereich der Spülmaschine aufweisen.

Alternativ oder zusätzlich hierzu kann das System zur Spülgutidentifizierung eine Barcodelese-Einrichtung zum vorzugsweisen automatischen und berührungslosen Identifizieren eines Spülgutteils vorzugsweise im Einstellbereich der Spülmaschine aufweisen.

Alternativ oder zusätzlich hierzu kann das System zur Spülgutidentifizierung eine Laserscanner-Einrichtung zum vorzugsweisen automatischen Erfassen mindestens eines für ein Spülgutteil charakterisierenden oberflächenspezifischen Merkmals und somit zum berührungslosen Identifizieren des Spülgutteils vorzugsweise im Einstellbereich der Spülmaschine aufweisen.

Hierbei ist es denkbar, dass das System zur Spülgutidentifizierung zur Zuordnung eines Identifikators zu dem Spülgutteil vorzugsweise im Einstellbereich der Spülmaschine eine Oberflächen-Mikrostruktur des entsprechenden Spülgutteils als Unterscheidungsmerkmal verwendet. So kann auf Basis der für jedes Spülgutteil individuellen Oberflächen-Mikrostruktur eine charakteristische Bitfolge generiert werden, welche dem Identifikator oder zumindest einen Teil des Identifikators bildet oder, welcher den Identifikator zugeordnet wird, wobei vorzugsweise im Einstellbereich der Spülmaschine an einer vorab festgelegten oder festlegbaren definierten Spülgutteilposition die Oberflächen-Mikrostruktur hochauflösend aufgenommen wird.

Alternativ oder zusätzlich hierzu kann das System zur Spülgutidentifizierung eine QR-Codelese-Einrichtung zum vorzugsweisen automatischen und berührungslosen Identifizieren eines Spülgutteils vorzugsweise im Einstellbereich der Spülmaschine aufweisen.

Alternativ oder zusätzlich hierzu kann das System zur Spülgutidentifizierung eine insbesondere auf dem YUV-Farbmodell basierende Identifizierungs-Einrichtung zum vorzugsweisen automatischen und berührungslosen Identifizieren eines Spülgutteils vorzugsweise im Einstellbereich der Spülmaschine aufweisen.

Grundsätzlich ist es von Vorteil, dass das System zur Spülgutidentifizierung ausgebildet ist, vorzugsweise automatisch oder wahlweise automatisch mindestens ein Merkmal eines im Einstellbereich der Spülmaschine aufgegebenen Spülgutteils zu erfassen, wobei das System zur Spülgutidentifizierung ferner ausgebildet ist, anhand des mindestens einen im Einstellbereich der Spülmaschine erfassten Merkmals das entsprechende Spülgutteil im Entnahmebereich der Spülmaschine wiederzuerkennen und vorzugsweise entsprechend zu kennzeichnen oder von anderen Spülgutteilen im Entnahmebereich zu individualisieren, herauszustellen oder zu separieren.

Gemäß Realisierungen der erfindungsgemäßen Spülmaschine ist die mindestens eine Behandlungszone ausgebildet, zeitlich gesehen nacheinander mindestens ein über die mindestens eine Transportvorrichtung der mindestens einen Behandlungszone zugeführtes Spülgutteil einer Waschbehandlung und einer nachgeordneten Klarspülbehandlung sowie optional einer der Klarspülbehandlung nachgeordneten Trocknung zu unterwerfen.

Alternativ hierzu kann die Spülmaschine mindestens eine erste Behandlungszone aufweisen, welche als Waschzone ausgebildet ist, und mindestens eine der mindestens einen ersten Behandlungszone - in Transportrichtung der Spülgutteile gesehen - nachgeschaltete zweite Behandlungszone aufweisen, welche als Spülzone, insbesondere Klarspülzone, ausgebildet ist, wobei optional die Spülmaschine ferner mindestens eine dritte Behandlungszone aufweist, welche als Trocknungszone ausgebildet und der mindestens einen zweiten Behandlungszone - in Transportrichtung der Spülgutteile gesehen - nachgeschaltet ist.

Gemäß Realisierungen der erfindungsgemäßen Spülmaschine ist vorgesehen, dass die Spülmaschine eine weitere Transportvorrichtung aufweist zum vorzugsweise automatischen und insbesondere bedarfsweisen Transportieren eines gereinigten Spülgutteils vom Entnahmebereich der Spülmaschine zu einem Dispenser, insbesondere zu einem Dispenser für ein Kalt- oder Warmgetränk eines Getränkeautomaten oder einer Kaffeemaschine, wobei die Spülmaschine insbesondere ferner einer Einrichtung zum Positionieren und/oder Ausrichten des Spülgutteils mit Bezug auf den Dispenser aufweist.

Ferner ist es denkbar, dass der Spülmaschine ein Pfandsystem zugeordnet ist, zum Rückführen eines in den Einstellbereich der Spülmaschine eingegebenen oder einzugebenden Spülgutteils insbesondere an den Betreiber der Spülmaschine oder zum Wiederverwenden des in den Einstellbereich der Spülmaschine eingegebenen oder einzugebenden Spülgutteils.

Bevorzugt befindet sich der Eingabebereich und der Ausgabebereich, die von einander räumlich getrennt sind, auf gegenüberliegenden Maschinenseiten.

Für die Übergabe an die Transportvorrichtung kann eine Ausrichtung des Spülguts sowie eine Orientierung des Spülguts erforderlich sein. Eine korrekte Ausrichtung und/oder Orientierung kann mechanisch in der Spülmaschine erzeugt oder einfacher vom Benutzer schon bei der Beladung, d.h. beim Eingeben des Spülguts in den Eingabebereich, sichergestellt werden. Zur Unterstützung kann beispielsweise visuell auf die erforderliche Orientierung hingewiesen werden.

Gemäß einer bevorzugten Ausführungsform der vorliegenden Erfindung weist hierzu der Eingabebereich eine Zugangsöffnung mit einer dem zu reinigendem Trinkgefäß entsprechenden Kulisse auf, wobei über die Kulisse eine Orientierung und gegebenenfalls Ausrichtung des Spülguts (Trinkgefäß) beim Einbringen des Spülguts (Trinkgefäße) in den Eingabebereich der Spülmaschine vorgegeben wird.

Gemäß Ausführungsformen der erfindungsgemäßen Spülmaschine ist der Ausgabebereich der Spülmaschine als Aufbewahrungsbereich ausgebildet, in welchem eine vorab festgelegte oder festlegbare Anzahl an gereinigten Trinkgefäßen zwischengespeichert werden kann. Alternativ oder zusätzlich hierzu ist es denkbar, dass der Eingabebereich als Aufbewahrungsbereich ausgebildet ist, zum Zwischenspeichern von noch zu reinigenden Trinkgefäßen.

Besonders bevorzugt ist vorgesehen, dass die Spülmaschine einen Aufbewahrungsbereich aufweist, in welchem eine vorab festgelegte oder festlegbare Anzahl an gereinigten Trinkgefäßen zwischengespeichert werden kann, wobei die Transportvorrichtung ausgebildet ist, bedarfsweise Trinkgefäße von dem Aufbewahrungsbereich zum Ausgabebereich der Spülmaschine zu transportieren.

Diese Lösung hat den Vorteil, dass in dem Ausgabebereich nur dann ein Trinkgefäß ausgegeben wird, wenn dieses von dem Benutzer angefordert wird. Eine Verschmutzung von bereits gereinigtem Spülgut im Ausgabebereich ist somit ausgeschlossen.

Als Aufbewahrungsbereich kann eine Platte dienen, auf welche die Transportvorrichtung die gereinigten Trinkgefäße (z.B. Tassen, Becher und dergleichen) hintereinander schiebt. Hierzu kann die Transportvorrichtung beispielsweise ein Transportband aufweisen.

Wenn die Spülmaschine in Kombination mit einem Heißgetränkeautomaten verwendet wird, ist es von Vorteil, wenn in dem Aufbewahrungsbereich oder zumindest in dem Ausgabebereich der Spülmaschine das Trinkgefäß vorgewärmt wird. Denkbar in diesem Zusammenhang ist es beispielsweise, eine entsprechende Heizeinrichtung im Aufbewahrungsbereich oder im Ausgabebereich vorzusehen. Als Heizeinrichtung können Wärmeschlangen unter oder Wärmestrahler über dem Aufbewahrungsbereich bzw. Ausgabebereich dienen.

Die Heizeinrichtung kann außerdem so angeordnet sein, dass die Trinkgefäße schon auf ihrem Weg aus der Klarspülzone zu dem Ausgabebereich oder Aufbewahrungsbereich erwärmt werden. Bei einer besonders vorteilhaften Ausführungsform der Erfindung kann die Heizeinrichtung auch zum Trocknen der Trinkgefäße eingesetzt werden.

Gemäß einem weiteren Aspekt der vorliegenden Erfindung ist vorgesehen, dass die Spülmaschine als Rücknahme-Automat für Mehrweg-Trinkgefäße, insbesondere Kaffeetassen oder dergleichen, ausgebildet ist und vorzugsweise eine Rückvergütungseinrichtung aufweist. Die Rückvergütung kann als Bargeld, Bon, Chipkarte oder mittels bargeldlosem Aufwertsystem etc. erfolgen.

Gemäß einer Weiterbildung der erfindungsgemäßen Spülmaschine weist diese eine Steuereinrichtung auf, um die Transportvorrichtung und die der Wasch- und Klarspülzone zugeordneten ansteuerbaren Komponenten (Pumpe, Ventil, Heizeinrichtung, etc.) anzusteuern. Die Steuereinrichtung ist vorzugsweise ausgebildet, den Transport des Spülguts durch die Behandlungszonen in Abhängigkeit von der Anwesenheit oder Abwesenheit von Trinkgefäßen im Eingabebereich und/oder Ausgabebereich entsprechend zu koordinieren.

Die Erfindung betrifft ferner eine Anordnung mit einem Getränkeautomaten und einer Spülmaschine der zuvor genannten erfindungsgemäßen Art. Bei dem Getränkeautomaten handelt es sich beispielsweise um einen Getränkespender für Heißgetränke (Heißgetränkeautomat). Selbstverständlich kann der Getränkeautomat auch als Kaltgetränkeautomat ausgelegt sein. Auch Mischformen sind denkbar und werden umfasst.

Die Kombination aus Getränkeautomat und Spülmaschine hat den Vorteil, dass der Getränkeautomat nicht mehr - wie üblich - einen Spendeschacht für dort bevorratete Einweggetränkebehälter aufweisen muss. Von daher ist auch eine kompaktere Bauform des Getränkeautomaten möglich, wobei gleichzeitig im Betrieb des Getränkeautomaten kein oder zumindest weniger Abfall anfällt.

Die erfindungsgemäße Spülmaschine kann insbesondere als Beistellgerät für Getränkeautomaten ausgebildet ein. Ein derartiges Beistellgerät ist als eine im Hinblick auf die Getränkeautomaten separate, modulare Funktionseinheit zu verstehen.

Alternativ hierzu ist es aber auch denkbar, dass die erfindungsgemäße Spülmaschine und der Getränkeautomat als Gesamtsystem kombiniert sind.

Insbesondere bei einer Kombination als Gesamtsystem kann der Klarspülzone oder Waschzone der Spülmaschine und den Getränkeautomaten ein gemeinsamer Wassererwärmer zugeordnet sein. Hierbei liegt der Erfindung die Erkenntnis zu Grunde, dass sowohl Getränkeautomaten als auch Spülmaschinen Heißwasser verbrauchen.

Indem die Getränkezubereitungseinrichtung des Getränkeautomaten und die Spülmaschine eine gemeinsame Heißwasseraufbereitung aufweisen, können verschiedene Vorteile erzielt werden. Nicht nur aus energetischer Sicht, sondern auch wegen des geringeren technischen Aufwands ist eine gemeinsame Heizeinrichtung zur Heißwasseraufbereitung von Vorteil. Sie spart auch Raum, wodurch sich die Kompaktheit der Kombination aus Spülmaschine und Getränkeautomat weiter steigern lässt. Als Heizeinrichtung dienen in der Regel Durchlauferhitzer oder Boiler Systeme, die vorzugsweise in die Getränkezubereitungseinrichtung des Getränkeautomaten integriert sind.

Weiter ist es im Hinblick auf eine Vereinfachung des Systems und im Hinblick auf eine möglichst bedienerfreundliche Anwendung des Systems von Vorteil, wenn dem Getränkeautomaten und der Spülmaschine ein gemeinsamer Frischwasseranschluss und/oder ein gemeinsamer Anschluss für elektrische Energie zugeordnet sind/ist.

Die erfindungsgemäße Spülmaschine ist - wie bereits ausgeführt - insbesondere für Kaffeeshops konzipiert. Aufgrund der kompakten Bauweise lässt sich die erfindungsgemäße Spülmaschine beispielsweise in das Thekenkonzept eines Kaffeeshops integrieren. Die Spülmaschine kann insbesondere als Untertisch- oder bevorzugt als Auftischmaschine ausgeführt und einer an eine Thekengröße angepasste Abmessung aufweisen.

Vorzugsweise weist die Grundfläche der Spülmaschine eine Abmessung von maximal 700 mm x 1.000 mm und vorzugsweise maximal 500 mm x 600 mm und noch bevorzugter maximal 350 mm x 600 mm auf. Mit diesen Abmessungen kann die Spülmaschine problemlos auf einer üblichen Theke platziert werden, die in der Regel eine Tiefe von 600 mm aufweist. Ebenfalls kann aufgrund der hybriden Ausgestaltung der Spülmaschine eine relativ geringe Bauhöhe realisiert werden. Gemäß Ausführungsformen beträgt die Höhe der Spülmaschine maximal 500 mm.

Gemäß Realisierungen der Spülmaschine weist diese eine Tür, beispielsweise eine Tambour-Tür, auf zum bedarfsweisen Verschließen einer zum Einstellbereich der Spülmaschine führenden Zugangsöffnung. Anstelle einer Tür kann auch ein Spritzvorhang (Spritztuch) bei der Zugangsöffnung vorgesehen sein.

Insbesondere ist es von Vorteil, dass der mindestens einen Behandlungszone eine Absaugeinrichtung zum Absaugen von Wrasen zugeordnet ist, und/oder dass der mindestens einen Behandlungszone ein Spritzschutz zugeordnet ist zum Verhindern eines Austritts von Wrasen und/oder Flüssigkeit aus der mindestens einen Behandlungszone.

Die Zugangsöffnung weist vorzugsweise eine Höhe von maximal 300 mm und vorzugsweise von maximal 250 mm und eine Breite von maximal 500 mm und vorzugsweise von maximal 350 mm auf. Dies erlaubt es, dass Trinkgefäße einzeln oder nebeneinander in den Einstellbereich eingestellt werden können.

Gemäß Ausführungsformen der erfindungsgemäßen Spülmaschine kommt als Transportvorrichtung eine Spiral- oder Helix-Fördereinrichtung und/oder eine Karussell-Fördereinrichtung zum Einsatz. Als Karussell-Fördereinrichtung eignet sich beispielsweise eine Drehscheibe, um eine zirkulare Förderung des Spülguts zu ermöglichen.

Vorzugsweise weist die Spülmaschine eine erste Tür, vorzugsweise in Gestalt einer Tambour-Tür auf zum bedarfsweisen Verschließen der Zugangsöffnung zum Einstellbereich der Spülmaschine und vorzugsweise ferner eine zweite Tür auf, vorzugsweise in Gestalt einer Tambour-Tür zum bedarfsweisen Verschließen einer Zugangsöffnung zum Entnahmebereich der Spülmaschine.

Nachfolgend werden unter Bezugnahme auf die Darstellungen in FIG. 2 bis FIG. 5 verschiedene Ausführungsformen der erfindungsgemäßen Spülmaschine näher beschrieben.

Nachfolgend wird die Erfindung anhand der beiliegenden Zeichnung näher beschrieben.

Es zeigen:
- FIG. 1: schematisch und in einer Seitenansicht eine erste exemplarische Ausführungsform der erfindungsgemäßen Spülmaschine;
- FIG. 2a: schematisch und in einer isometrischen Ansicht eine zweite exemplarische Ausführungsform der erfindungsgemäßen Spülmaschine, und zwar in einem Zustand, in welchem eine Tür der Spülmaschine zum Einstellbereich geöffnet ist und in dem Einstellbereich kein Spülgutteil aufgenommen ist;
- FIG. 2b: schematisch und in einer Ansicht auf den Einstellbereich die zweite exemplarische Ausführungsform der erfindungsgemäßen Spülmaschine gemäß FIG. 2a;
- FIG. 2c: schematisch und in einer isometrischen Ansicht die zweite exemplarische Ausführungsform der erfindungsgemäßen Spülmaschine, und zwar in einem Zustand, in welchem eine Tür der Spülmaschine zum Einstellbereich geschlossen ist;
- FIG. 2d: schematisch und in einer Ansicht auf den Einstellbereich die zweite exemplarische Ausführungsform der erfindungsgemäßen Spülmaschine gemäß FIG. 2c;
- FIG. 2e: schematisch und in einer Seitenansicht die zweite exemplarische Ausführungsform der erfindungsgemäßen Spülmaschine;
- FIG. 2f: schematisch und in einer isometrischen Ansicht die zweite exemplarische Ausführungsform der erfindungsgemäßen Spülmaschine, und zwar in einem Zustand, in welchem eine Tür der Spülmaschine zum Einstellbereich geöffnet ist und in dem Einstellbereich mindestens ein Spülgutteil aufgenommen ist;
- FIG. 2g: schematisch und in einer Ansicht auf den Einstellbereich die zweite exemplarische Ausführungsform der erfindungsgemäßen Spülmaschine gemäß FIG. 2f;
- FIG. 2h: schematisch und in einer geschnittenen Seitenansicht die zweite exemplarische Ausführungsform der erfindungsgemäßen Spülmaschine, und zwar in einem Zustand, in welchem mindestens ein Spülgutteil jeweils im Einstellbereich, in der mindestens einen Behandlungszone und im Entnahmebereich der Spülmaschine vorhanden ist;
- FIG. 3a: schematisch und in einer isometrischen Ansicht eine dritte exemplarische Ausführungsform der erfindungsgemäßen Spülmaschine, und zwar in einem Zustand, in welchem eine Tür der Spülmaschine zum Einstellbereich geöffnet ist und in dem Einstellbereich kein Spülgutteil aufgenommen ist;
- FIG. 3b: schematisch und in einer Ansicht auf den Einstellbereich die dritte exemplarische Ausführungsform der erfindungsgemäßen Spülmaschine gemäß FIG. 3a;
- FIG. 3c: schematisch und in einer isometrischen Ansicht die dritte exemplarische Ausführungsform der erfindungsgemäßen Spülmaschine, und zwar in einem Zustand, in welchem eine Tür der Spülmaschine zum Einstellbereich geschlossen ist;
- FIG. 3d: schematisch und in einer Ansicht auf den Einstellbereich die dritte exemplarische Ausführungsform der erfindungsgemäßen Spülmaschine gemäß FIG. 3c;
- FIG. 3e: schematisch und in einer Seitenansicht die dritte exemplarische Ausführungsform der erfindungsgemäßen Spülmaschine;
- FIG. 3f: schematisch und in einer isometrischen Ansicht die dritte exemplarische Ausführungsform der erfindungsgemäßen Spülmaschine, und zwar in einem Zustand, in welchem eine Tür der Spülmaschine zum Einstellbereich geöffnet ist und in dem Einstellbereich mindestens ein Spülgutteil aufgenommen ist;
- FIG. 3g: schematisch und in einer Ansicht auf den Einstellbereich die dritte exemplarische Ausführungsform der erfindungsgemäßen Spülmaschine gemäß FIG. 3f;
- FIG. 3h: schematisch und in einer geschnittenen Seitenansicht die dritte exemplarische Ausführungsform der erfindungsgemäßen Spülmaschine, und zwar in einem Zustand, in welchem mindestens ein Spülgutteil jeweils im Einstellbereich, in der mindestens einen Behandlungszone und im Entnahmebereich der Spülmaschine vorhanden ist;
- FIG. 4a: schematisch und in einer isometrischen Ansicht eine vierte exemplarische Ausführungsform der erfindungsgemäßen Spülmaschine, und zwar in einem Zustand, in welchem eine Tür der Spülmaschine zum Einstellbereich geöffnet ist und in dem Einstellbereich kein Spülgutteil aufgenommen ist;
- FIG. 4b: schematisch und in einer Ansicht auf den Einstellbereich die vierte exemplarische Ausführungsform der erfindungsgemäßen Spülmaschine gemäß FIG. 4a;
- FIG. 4c: schematisch und in einer isometrischen Ansicht die vierte exemplarische Ausführungsform der erfindungsgemäßen Spülmaschine, und zwar in einem Zustand, in welchem eine Tür der Spülmaschine zum Einstellbereich geschlossen ist;
- FIG. 4d: schematisch und in einer Ansicht auf den Einstellbereich die vierte exemplarische Ausführungsform der erfindungsgemäßen Spülmaschine gemäß FIG. 4c;
- FIG. 4e: schematisch und in einer Seitenansicht die vierte exemplarische Ausführungsform der erfindungsgemäßen Spülmaschine;
- FIG. 4f: schematisch und in einer isometrischen Ansicht die vierte exemplarische Ausführungsform der erfindungsgemäßen Spülmaschine, und zwar in einem Zustand, in welchem eine Tür der Spülmaschine zum Einstellbereich geöffnet ist und in dem Einstellbereich mindestens ein Spülgutteil aufgenommen ist;
- FIG. 4g: schematisch und in einer Ansicht auf den Einstellbereich die vierte exemplarische Ausführungsform der erfindungsgemäßen Spülmaschine gemäß FIG. 4f;
- FIG. 4h: schematisch und in einer geschnittenen Seitenansicht die vierte exemplarische Ausführungsform der erfindungsgemäßen Spülmaschine, und zwar in einem Zustand, in welchem mindestens ein Spülgutteil jeweils im Einstellbereich, in der mindestens einen Behandlungszone und im Entnahmebereich der Spülmaschine vorhanden ist;
- FIG. 5a: schematisch und in einer isometrischen Ansicht eine fünfte exemplarische Ausführungsform der erfindungsgemäßen Spülmaschine, und zwar in einem Zustand, in welchem in dem Entnahmebereich der Spülmaschine ein Spülgutteil aufgenommen ist;
- FIG. 5b: schematisch und in einer isometrischen Ansicht die fünfte exemplarische Ausführungsform der erfindungsgemäßen Spülmaschine, und zwar in einem Zustand, in welchem in dem Entnahmebereich der Spülmaschine zwei Spülgutteile aufgenommen sind; und
- FIG. 5c: schematisch und in einer geschnittenen Draufsicht die fünfte exemplarische Ausführungsform der erfindungsgemäßen Spülmaschine gemäß FIG. 5b.

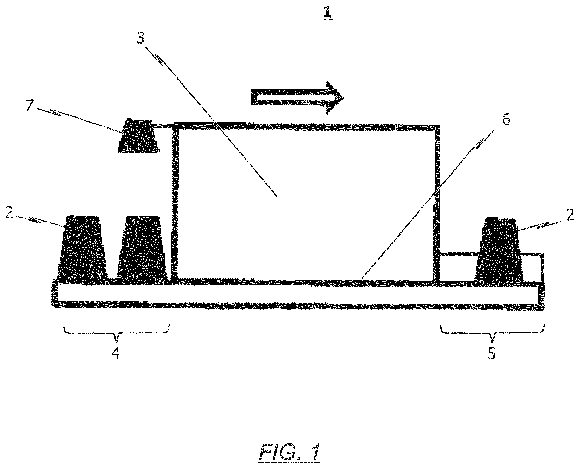

In FIG. 1 ist schematisch und in einer Seitenansicht eine erste exemplarische Ausführungsform der erfindungsgemäßen Spülmaschine 1 gezeigt. Die Spülmaschine 1 eignet sich insbesondere zum Reinigen von Spülgutteilen 2 in Gestalt von Trinkgefäßen, insbesondere in Gestalt von Trinkbechern, Tassen, Gläsern oder Flaschen.

Hierzu weist die Spülmaschine 1 mindestens eine Behandlungszone 3 und mindestens eine Transportvorrichtung 6 zum Transportieren der zu reinigenden Spülgutteile 2 von einem Einstellbereich 4 der Spülmaschine 1 durch die mindestens eine Behandlungszone 3 der Spülmaschine 1 zu einem Entnahmebereich 5 der Spülmaschine 1 auf.

Dabei ist die Transportvorrichtung 6 ausgebildet, eine vorab festgelegte oder festlegbare Gruppe von zu reinigenden Spülgutteilen 2 chargenweise von dem Einstellbereich 4 durch die mindestens eine Behandlungszone 3 zu transportieren und dann die Gruppe von Spülgutteilen 2 als gereinigte Spülgutteile 2 dem Entnahmebereich 5 zuzuführen, oder die zu reinigenden Spülgutteile 2 vereinzelt von dem Einstellbereich 4 durch die mindestens eine Behandlungszone 3 zu transportieren und dann dem Entnahmebereich 5 als gereinigtes Spülgutteil 2 zuzuführen.

Im Einzelnen weist die Spülmaschine 1 ein Gehäuse auf, in welchem als Behandlungszonen 3 eine Waschzone sowie eine Klarspülzone untergebracht sind.

Bei der Klarspülzone handelt es sich um eine Frischwasser-Klarspülzone, in welcher Frischwasser mit gegebenenfalls zudosiertem Klarspüler auf das zu behandelnde Spülgut versprüht wird.

In diesem Zusammenhang ist es denkbar, dass zwischen der Waschzone und der Klarspülzone noch eine weitere Behandlungszone 3 in Gestalt einer Pumpen-Klarspülzone vorgesehen ist. In dieser Pumpen-Klarspülzone wird die zuvor in der Frischwasser-Klarspülzone versprühte Flüssigkeit rezirkulierend auf das Spülgut gesprüht.

Die einzelnen Behandlungszonen 3 der Spülmaschine 1 können räumlich voneinander getrennt angeordnet sein, wobei zwischen den Behandlungszonen 3 ein entsprechender Spritzschutz, beispielsweise in Gestalt eines Vorhangs, vorgesehen sein kann, um ein Überspritzen von Flüssigkeit und eine Wiederanschmutzung des Spülguts zu verhindern.

Um jedoch einen möglichst kompakten Aufbau der Spülmaschine 1 zu erzielen, ist es von Vorteil, dass die Behandlungszonen 3 oder zumindest einige Behandlungszonen 3 der Spülmaschine 1 in einer gemeinsamen Behandlungskammer der Spülmaschine 1 ausgebildet sind. In diesem Fall sollte die Spülmaschine 1 eine Steuereinrichtung aufweisen, welche ausgebildet ist, die mindestens eine Transportvorrichtung 6 derart anzusteuern, dass mit der mindestens einen Transportvorrichtung 6 die zu reinigenden Spülgutteile 2 diskontinuierlich von dem Einstellbereich 4 der Spülmaschine 1 durch die mindestens eine Behandlungszone 3 zu dem Entnahmebereich 5 der Spülmaschine 1 transportiert werden.

Die exemplarische Ausführungsform der erfindungsgemäßen Spülmaschine 1, wie sie exemplarisch in FIG. 1 dargestellt ist, zeichnet sich dadurch aus, dass diese einen Einstellbereich 4 aufweist, in den manuell das in der Spülmaschine 1 zu reinigende Spülgut eingegeben/eingesetzt werden kann. Darüber hinaus ist ein separat hiervon ausgeführter Entnahmebereich 5 vorgesehen, über den das in den Behandlungszonen 3 der Spülmaschine 1 behandelte/gereinigte Spülgut ausgegeben wird.

Der Einstellbereich 4 und der Entnahmebereich 5 sind insbesondere an gegenüberliegenden Seiten des Gehäuses der Spülmaschine 1 ausgebildet.

Die Spülmaschine 1 weist ferner die bereits erwähnte mindestens eine Transportvorrichtung 6 auf, mit welcher das in den Einstellbereich 4 eingegebene (schmutzige) Spülgut durch die Behandlungszonen 3 der Spülmaschine 1 zu dem Entnahmebereich 5 gefördert wird.

Aufgrund der Kompaktheit der Spülmaschine 1 kann die Beladungsöffnung des Einstellbereiches 4 entsprechend klein ausfallen. Wenn - wie bei den in den Zeichnungen gezeigten exemplarischen Ausführungsformen - die Spülmaschine 1 zum Reinigen von Trinkgefäßen, insbesondere Mehrweg-Trinkgefäßen wie Kaffeetassen, dient, kann die Beladungsöffnung des Einstellbereiches 4 ein wenig höher als das zu behandelnde Trinkgefäß 2 sein.

Obgleich in FIG. 1 nicht dargestellt, kann der Zugangsöffnung des Einstellbereiches 4 der Spülmaschine 1 eine dem zu reinigenden Trinkgefäß 2 entsprechende Kulisse zugeordnet sein, um eine Orientierung des Trinkgefäßes 2 beim Einbringen des Trinkgefäßes 2 in den Einstellbereich 4 vorzugeben.

Der Entnahmebereich 5 der Spülmaschine 1 gemäß FIG. 1 ist als Aufbewahrungsbereich ausgebildet und dient zum Zwischenspeichern einer vorab festgelegten oder festlegbaren Anzahl an gereinigten Trinkgefäßen 2. In gleicher Weise kann der Einstellbereich 4 der Spülmaschine 1 ebenfalls als Aufbewahrungsbereich ausgebildet sein, um eine vorab festgelegte oder festlegbare Anzahl an zu reinigenden Trinkgefäßen 2 zwischen zu speichern. Dies ermöglicht einen sogenannten Batch-Betrieb der Spülmaschine 1.

Vorzugsweise weist die Spülmaschine 1 eine Steuereinrichtung auf, um die Transportvorrichtung 6 sowie die der Wasch- und Klarspülzone zugeordneten ansteuerbaren Komponenten entsprechend anzusteuern. Die Steuereinrichtung ist ausgebildet, die Transportvorrichtung 6 der Spülmaschine 1 und gegebenenfalls die ansteuerbaren Komponenten der Wasch- und Klarspülzone in Abhängigkeit von einer Anwesenheit oder Abwesenheit oder in Abhängigkeit einer Anzahl von Trinkgefäßen 2 im Einstellbereich 4 und/oder Entnahmebereich 5 anzusteuern.

Obgleich in FIG. 1 nicht dargestellt, ist es denkbar, dass die Spülmaschine 1 als Rücknahme-Automat für Mehrweg-Trinkgefäße 2, insbesondere Kaffeetassen, ausgebildet ist und vorzugsweise eine entsprechende Rückvergütungseinrichtung aufweist.

Die erfindungsgemäße Spülmaschine 1, wenn diese in Kombination mit einem Getränkeautomaten, insbesondere Heißgetränkeautomaten, eingesetzt wird, ermöglicht den Einsatz von wiederverwendbarem Geschirr und vermeidet somit Abfall, etc.

Mit der erfindungsgemäßen Lösung ist eine Zeitersparnis bei der Handhabung erzielbar. Schmutziges Spülgut (Trinkgefäße 2) gehen direkt in die Spülmaschine 1, d.h., kein Transport von schmutzigen Trinkgefäßen 2 in eine Küche bzw. saubere Trinkgefäße 2 von der Küche zurück zu dem Heißgetränkeautomaten.

Darüber hinaus liefert die Erfindung eine Platzersparnis, da kein Platz um den Heißgetränkeautomaten herum notwendig ist, um saubere und verschmutzte Trinkgefäße 2 zu lagern.

Die erfindungsgemäße Spülmaschine 1 eignet sich insbesondere als eine spezielle Kaffeetassen-Spülmaschine 1 die sich idealerweise in der direkten Umgebung der Kaffeemaschine oder sogar als integraler Bestandteil in einem Kaffeeshop oder ähnlichem Aufstellungsort befindet. Die Spülmaschine 1 besitzt einen Eingabeort im dem das verschmutze Geschirr eingestellt wird und einen davon getrennten Ausgabeort wo das saubere Geschirr entnommen werden kann. Die Tassen, Gläser etc. können vereinzelt (d.h. eine nach der anderen) aufgeben werden und ebenso entnommen werden, auch eine Beladung in kleineren Gruppen sollte ggf. möglich sein.

Bevorzugt befindet sich der Eingabeort auf einer Schmutzseite und der Ausgabeort an einer räumlich getrennten Sauberseite. Beispielsweise kann die Tasse auf der einen Seite von einem Kunden eingestellt und auf der gegenüberliegenden Seite vom gleichen Kunden, oder von einem anderen Kunden oder sogar von einer Service Kraft entnommen werden.

Beispielsweise eignet sich die erfindungsgemäße Spülmaschine 1 für den Einsatz in Kaffeeshop Ketten, wie z.B. Starbucks: Ein Kunde kommt mit "seiner" Tasse in den Kaffeeshop und wünscht eine Neubefüllung in "seine" Tasse.

Die Tasse wird von der Spülmaschine 1 automatisch gewaschen und dann neu befüllt. Damit der Kunde auch wirklich "seine" eigene Tasse zurück bekommt ist diese gekennzeichnet - entweder analog oder digital.

Zur Realisierung dieser Ausführungsform ist es denkbar, dass die Spülmaschine 1 vorzugsweise im oder beim Einstellbereich 4 ein System 7 zur Spülgutidentifizierung aufweist, wobei das System 7 zur Spülgutidentifizierung ausgebildet ist, einem Spülgutteil 2 in oder beim Einstellbereich 4 einen Identifikator zuzuordnen, welcher eine eindeutige Identifizierung des in dem Einstellbereich 4 aufgegebenen Spülgutteils im Entnahmebereich 5 der Spülmaschine 1 erlaubt.

In diesem Zusammenhang ist es denkbar, dass die Spülmaschine 1 vorzugsweise im oder beim Einstellbereich 4 ein System 7 zur Spülgutidentifizierung aufweist, wobei das System 7 zur Spülgutidentifizierung ausgebildet ist, einem Spülgutteil 2 im oder beim Einstellbereich 4 einen Identifikator zuzuordnen, welcher eine eindeutige Identifizierung des in den Einstellbereich 4 aufgegeben Spülgutteils im Entnahmebereich 5 der Spülmaschine 1 erlaubt.

Grundsätzlich ist es von Vorteil, dass das System 7 zur Spülgutidentifizierung ausgebildet ist, vorzugsweise automatisch oder wahlweise automatisch mindestens ein Merkmal eines im Einstellbereich 4 der Spülmaschine 1 aufgegebenen Spülgutteils zu erfassen, wobei das System 7 zur Spülgutidentifizierung ferner ausgebildet ist, anhand des mindestens einen im Einstellbereich 4 der Spülmaschine 1 erfassten Merkmals das entsprechende Spülgutteil 2 im Entnahmebereich 5 der Spülmaschine 1 wiederzuerkennen und vorzugsweise entsprechend zu kennzeichnen oder von anderen Spülgutteilen 2 im Entnahmebereich 5 zu individualisieren, herauszustellen oder zu separieren.

Insbesondere ist die erfindungsgemäße Spülmaschine 1 ausgebildet, aufgrund ihrer Bauform und Baugröße in den Thekenbereich z.B. eines Kaffeeshops integriert zu werden, so dass die schmutzige Tasse vom Kunden in einem Bereich vor der Theke in die Maschine gestellt werden kann, und die saubere Tasse dann nach erfolgtem Spülprozess vom Personal hinter der Theke aus der Maschine entnommen werden kann, um diese dann direkt zum Wiederbefüllen gemäß der Kundenbestellung zu verwenden.

Der Entnahmebereich 5 der Spülmaschine 1 kann zusätzlich mit einer Art Transportband / Fördereinrichtung ausgestattet sein, mit welchem es möglich ist, das saubere Spülgut vom eigentlichen Entnahmebereich 5 in einen zusätzlichen Lagerbereich, z.B. neben der Spülmaschine 1 oder auf der anderen Seite der Kaffeemaschine, zu transportieren, um dadurch die Kapazität bzw. die max. mögliche Anzahl an Tassen und Gläser, welche im Umlauf sein können beliebig zu erhöhen, ohne hierzu die Größe der eigentlichen Spülmaschine 1 vergrößern zu müssen.

Insbesondere ist es in diesem Zusammenhang denkbar, dass das saubere Spülgut durch das zusätzliche Transportband/ Fördereinrichtung nicht in einen separaten Lagerbereich transportiert wird, sondern eine direkte Anbindung zu einer Kaffeemaschine besteht (inkl. Drehung der Tasse um 180°, so dass die Öffnung nach oben zeigt), so dass die saubere Tasse direkt im Anschluss nach erfolgtem Spülprozess vollautomatisch mit dem Getränk gemäß der Kundenbestellung befüllt werden kann.

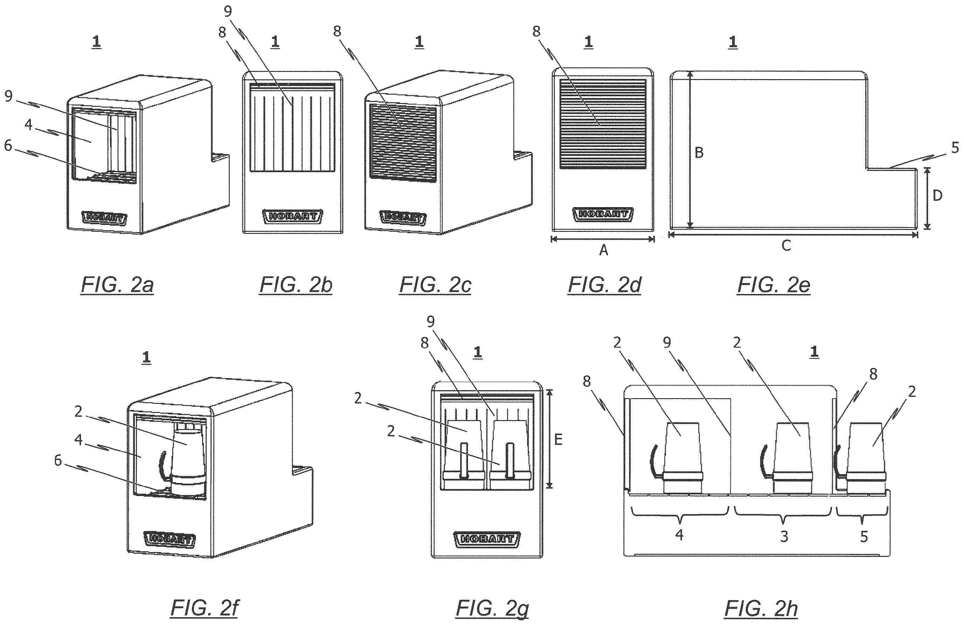

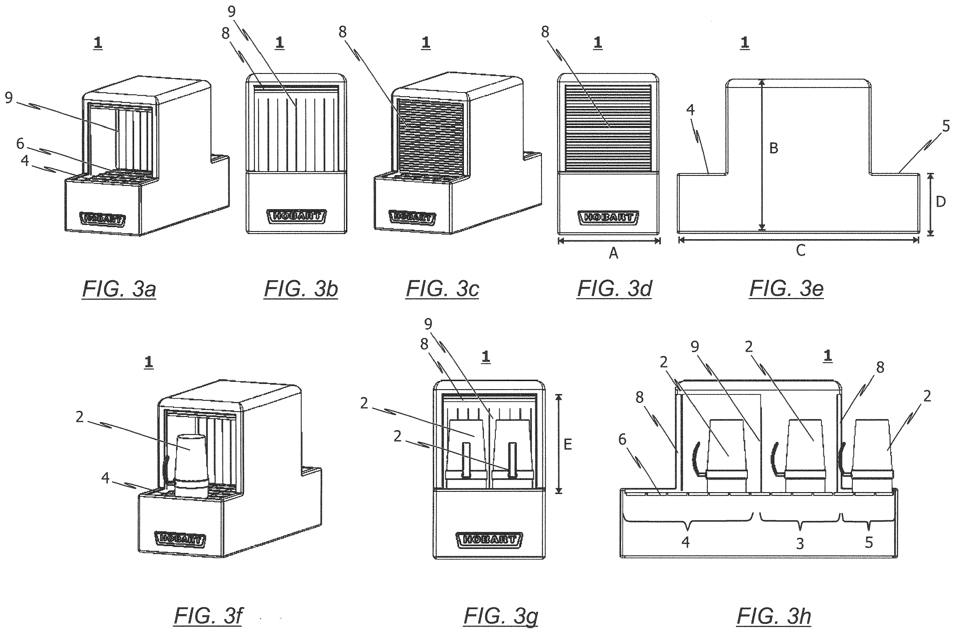

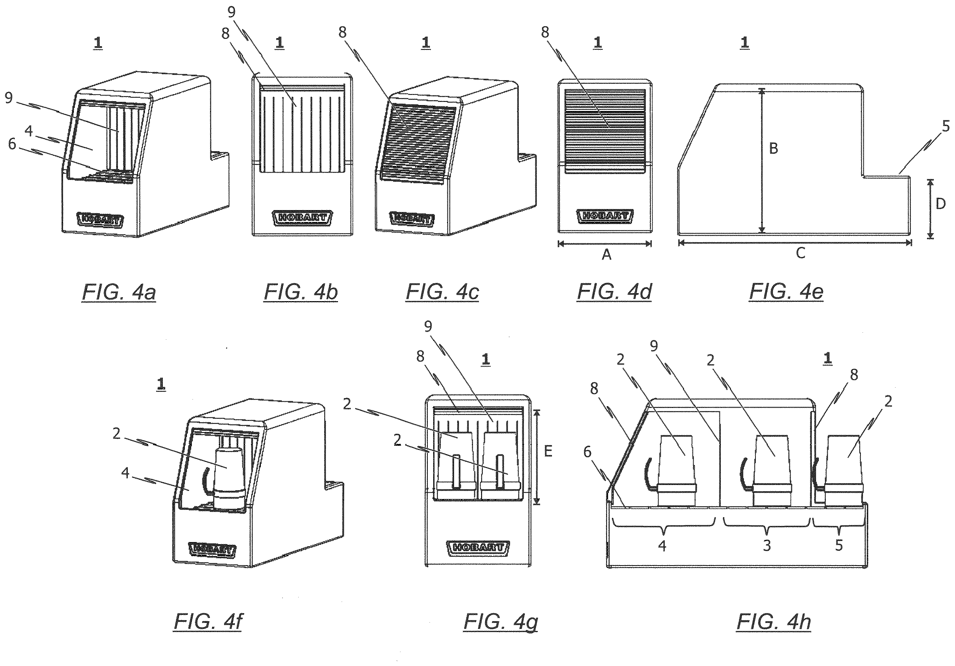

Nachfolgend werden unter Bezugnahme auf die Darstellungen in FIG. 2 bis FIG. 5 weitere Ausführungsformen der erfindungsgemäßen Spülmaschine 1 näher beschrieben.

Im Einzelnen sind diese Ausführungsformen jeweils als Auftischmaschinen ausgeführt, so dass diese problemlos auf Theke beispielsweise eines Kaffeeshops gestellt werden können. Die Ausführungsformen der erfindungsgemäßen Spülmaschinen 1 sind ausgebildet, chargenweise Spülgutteile 2 von dem Einstellbereich 4 durch die mindestens eine Behandlungszone 3 zu transportieren und dann die Spülgutteile 1 als gereinigte Spülgutteile 1 dem Entnahmebereich 5 zuzuführen.

Dabei kann die Spülmaschine eine Tür 8, insbesondere Tambour-Tür, aufweisen, um eine Zugangsöffnung zum Einstellbereich 4 der Spülmaschine bedarfsweise zu verschließen. Die Tür 8 kann manuell oder automatisch betätigbar sein. Bei einer automatischen Betätigung der Tür 8 kann dem Einstellbereich eine Sensorik zugeordnet sein, welche ausgebildet ist, das Vorhandensein eines Spülgutteils 2 im Einstellbereich 4 zu erfassen, wobei die Sensorik beim Erfassen eines Spülgutteils 2 im Einstellbereich 4 eine Türmechanik ansteuert, um die Tür 8 zu schließen und ein Behandlungsprogramm der Spülmaschine 1 zu starten.

Die Spülmaschinen gemäß den in FIG. 2 bis FIG. 5 gezeigten Ausführungsformen eignen sich insbesondere somit für Kaffeeshops, bei denen die Kunden ihre eigene Tasse mitbringen, wobei diese Tasse jedoch vor dem Befüllen beispielsweise mit einem Heißgetränk noch vor Ort gereinigt werden müssen. Dann kann die zu reinigende Tasse vereinzelt von dem Einstellbereich 4 durch die Behandlungszone 3 transportiert und dann dem Entnahmebereich 5 zugeführt werden.

Andererseits eignen sich die Spülmaschinen 1 auch für Situationen, bei denen gleichzeitig mehrere Spülgutteile gereinigt werden müssen, wie es beispielsweise dann der Fall ist, wenn Spülgut 2 anfällt, welches nicht zu individualisieren ist. In diesem Fall können die zu reinigenden Spülgutteile 2 chargenweise durch die Behandlungszone 5 als Gruppe geleitet werden.

Bei den in FIG. 2 bis FIG. 4 gezeigten Ausführungsformen ist vorgesehen, dass die Transportvorrichtung 6 der Spülmaschine 1 eine Transportspur, insbesondere in Gestalt eines Transportbands, aufweist, wobei diese Transportspur ausgebildet ist, die Spülgutteile 2 vereinzelt oder paarweise durch die mindestens eine Behandlungskammer 3 der Spülmaschine 1 zu führen. Dabei ist die Breite der Transportspur entsprechend schmal gewählt. In bevorzugten Realisierungen der erfindungsgemäßen Spülmaschine 1 weist die Transportspur eine effektive Breite von vorzugsweise maximal 30 cm und vorzugsweise von maximal 15 cm auf.

Die in FIG. 2 bis FIG. 5 gezeigten Ausführungsformen der erfindungsgemäßen Spülmaschine 1 weisen eine Steuereinrichtung auf, welche ausgebildet ist, die Transportvorrichtung 6 derart anzusteuern, dass mit der Transportvorrichtung 6 die zu reinigenden Spülgutteile 2 diskontinuierlich von dem Einstellbereich 4 der Spülmaschine 1 durch die mindestens eine Behandlungszone 3 zu dem Entnahmebereich 5 der Spülmaschine 1 transportiert werden.

Mit Hilfe der Transportvorrichtung 6 werden dabei die zu reinigenden Spülgutteile 2 von dem Einstellbereich 4 in die mindestens eine Behandlungszone 3 transportiert, wobei dann die Transportvorrichtung 6 stoppt und die Spülgutteile 2 ortsfest in der Behandlungszone 3 gereinigt (Waschphase und Klarspülphase bzw. optional anschließende Trocknungsphase) gereinigt werden, wobei danach mit Hilfe der Transportvorrichtung 6 das gereinigte Spülgut 2 zum Entnahmebereich 5 transportiert wird.

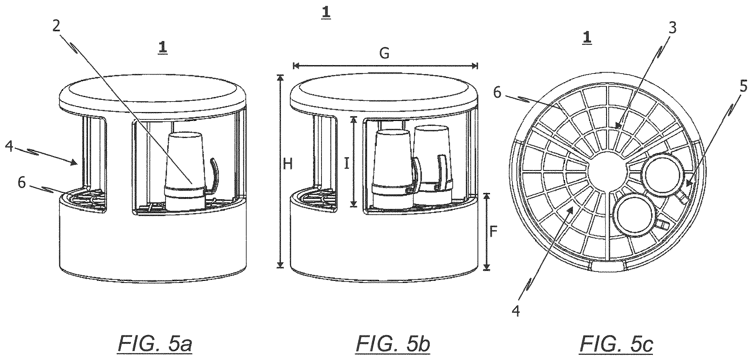

In FIG. 5 ist eine Ausführungsform der erfindungsgemäßen Spülmaschine 1 gezeigt, bei welcher als Transportvorrichtung 6 eine Karussell-Fördereinrichtung zum Einsatz. Als Karussell-Fördereinrichtung eignet sich beispielsweise eine Drehscheibe, um eine zirkulare Förderung des Spülguts 2 zu ermöglichen.

Die Zugangsöffnung der erfindungsgemäßen Spülmaschine 1 weist vorzugsweise eine Höhe von maximal 300 mm und eine Breite von maximal 500 mm und vorzugsweise von maximal 350 mm auf.

Die bevorzugten Abmessungen der in FIG. 2 bis FIG. 5 gezeigten Spülmaschinen 1 sind in der nachfolgenden Tabelle zusammengefasst:

| | | |
|---|---|---|
| **A** | 140 bis 340 mm | vorzugsweise 200 bis 280 mm |
| **B** | 285 bis 485 mm | vorzugsweise 345 bis 425 mm |
| **C** | 400 bis 850 mm | vorzugsweise 500 bis 600 mm |
| **D** | 100 bis 250 mm | vorzugsweise 120 bis 200 mm |
| **E** | 150 bis 300 mm | vorzugsweise 180 bis 240 mm |
| **F** | 100 bis 250 mm | vorzugsweise 120 bis 200 mm |
| **G** | 300 bis 650 mm | vorzugsweise 350 bis 550 mm |
| **H** | 285 bis 485 mm | vorzugsweise 345 bis 425 mm |
| **I** | 150 bis 300 mm | vorzugsweise 180 bis 240 mm |

Die Spülmaschine 1 ist vorzugsweise ferner mit einem Spritzschutz 9 versehen, um den Einstellbereich 4 von der mindestens einen Behandlungskammer 3 abzuschirmen und insbesondere auch den Austritt von Wrasen zu verhindern.

Die Erfindung ist nicht auf die in den Zeichnungen gezeigten exemplarischen Ausführungsformen beschränkt, sondern ergibt sich aus einer Zusammenschau sämtlicher hierin offenbarter Merkmale.

## Patentansprüche

1. Spülmaschine (1) zum Reinigen von Spülgutteilen (2) in Gestalt von Trinkgefäßen, insbesondere in Gestalt von Trinkbechern, Tassen, Gläsern oder Flaschen, wobei die Spülmaschine (1) mindestens eine Behandlungszone (3) und mindestens eine Transportvorrichtung (6) zum Transportieren der zu reinigenden Spülgutteile (2) von einem Einstellbereich (4) der Spülmaschine (1) durch die mindestens eine Behandlungszone (3) der Spülmaschine (1) zu einem Entnahmebereich (5) der Spülmaschine (1) aufweist,
dadurchgekennzeichnet, dass
die Transportvorrichtung (6) ausgebildet ist, eine vorab festgelegte oder festlegbare Gruppe von zu reinigenden Spülgutteilen (2) chargenweise von dem Einstellbereich (4) durch die mindestens eine Behandlungszone (3) zu transportieren und dann die Gruppe von Spülgutteilen (2) als gereinigte Spülgutteile (2) dem Entnahmebereich (5) zuzuführen; oder
dass die Transportvorrichtung (6) ausgebildet ist, die zu reinigenden Spülgutteile (2) vereinzelt von dem Einstellbereich (4) durch die mindestens eine Behandlungszone (3) zu transportieren und dann dem Entnahmebereich (5) als gereinigtes Spülgutteil (2) zuzuführen.

2. Spülmaschine (1) nach Anspruch 1,
wobei die Spülmaschine (1) eine Steuereinrichtung aufweist, welche ausgebildet ist, die mindestens eine Transportvorrichtung (6) derart anzusteuern, dass vorzugsweise wahlweise die Transportvorrichtung (6) eine vorab festgelegte oder festlegbare Gruppe von zu reinigenden Spülgutteilen (2) chargenweise von dem Einstellbereich (4) durch die mindestens eine Behandlungszone (3) transportiert und dann die Gruppe von Spülgutteilen (2) als gereinigte Spülgutteile (2) dem Entnahmebereich (5) zuführt, oder die zu reinigenden Spülgutteile (2) vereinzelt von dem Einstellbereich (4) durch die mindestens eine Behandlungszone (3) transportiert und dann dem Entnahmebereich (5) als gereinigtes Spülgutteil (2) zuführt.

3. Spülmaschine (1) nach Anspruch 1 oder 2,
wobei die Transportvorrichtung (6) mindestens eine Transportspur, insbesondere in Gestalt eines Transportbands, aufweist, wobei die mindestens eine Transportspur eine effektive Breite von vorzugsweise maximal 30 cm und insbesondere von maximal 15 cm aufweist,
wobei die Transportvorrichtung (6) vorzugsweise mindestens zwei parallel zueinander verlaufende Transportspuren, insbesondere jeweils in Gestalt eines Transportbands, aufweist, wobei jede Transportspur vorzugsweise eine effektive Breite von maximal 30 cm und insbesondere maximal 15 cm aufweist.

4. Spülmaschine (1) nach einem der Ansprüche 1 bis 3,
wobei die Transportvorrichtung (6) eine erste Transportspur, insbesondere in Gestalt eines Transportbands, und mindestens eine zweite Transportspur, insbesondere in Gestalt eines Transportbands, aufweist,
wobei die erste Transportspur vorzugsweise individualisierten Spülgutteilen (2) zugeordnet ist und wobei die mindestens eine zweite Transportspur vorzugsweise sonstigen Spülgutteilen (2) zugeordnet ist, wobei die erste Transportspur vorzugsweise ausgebildet ist, die von ihr durch die mindestens eine Behandlungszone (3) der Spülmaschine (1) transportierten Spülgutteile (2) im Entnahmebereich (5) der Spülmaschine (1) insbesondere räumlich separiert von dem mit der mindestens einen zweiten Transportspur durch die mindestens eine Behandlungszone (3) der Spülmaschine (1) transportierten Spülgutteilen (2) auszugeben.

5. Spülmaschine (1) nach einem der Ansprüche 1 bis 4,
wobei die Spülmaschine (1) eine Steuereinrichtung aufweist, welche ausgebildet ist, die mindestens eine Transportvorrichtung (6) derart anzusteuern, dass mit der mindestens einen Transportvorrichtung (6) die zu reinigenden Spülgutteile (2) diskontinuierlich von dem Einstellbereich (4) der Spülmaschine (1) durch die mindestens eine Behandlungszone (3) zu dem Entnahmebereich (5) der Spülmaschine (1) transportiert werden; oder wobei die Spülmaschine (1) eine Steuereinrichtung aufweist, welche ausgebildet ist, die mindestens eine Transportvorrichtung (6) derart anzusteuern, dass mit der mindestens einen Transportvorrichtung (6) die zu reinigenden Spülgutteile (2) kontinuierlich und insbesondere mit einer vorab festgelegten oder festlegbaren Transportgeschwindigkeit durch die mindestens eine Behandlungszone (3) transportiert werden.

6. Spülmaschine (1) nach einem Ansprüche 1 bis 5,
wobei die Spülmaschine (1) ausgebildet ist, ein in den Einstellbereich (4) der Spülmaschine (1) eingegebenes und in der mindestens einen Behandlungszone (3) der Spülmaschine (1) behandeltes Spülgutteil (2) im Entnahmebereich (5) der Spülmaschine (1) derart individualisiert auszugeben, dass das in der mindestens eine Behandlungszone (3) behandelte Spülgutteil (2) im Entnahmebereich (5) eindeutig einem Individuum zuortbar ist.

7. Spülmaschine (1) nach Anspruch 6,
wobei die Spülmaschine (1) vorzugsweise im oder beim Einstellbereich (4) ein System (7) zur Spülgutidentifizierung aufweist, wobei das System (7) zur Spülgutidentifizierung ausgebildet ist, einem Spülgutteil (2) im oder beim Einstellbereich (4) einen Identifikator zuzuordnen, welcher eine eindeutige Identifizierung des in den Einstellbereich (4) aufgegeben Spülgutteils (2) im Entnahmebereich (5) der Spülmaschine (1) erlaubt.

8. Spülmaschine (1) nach Anspruch 7,
wobei das System (7) zur Spülgutidentifizierung eine RFID-Einrichtung zum vorzugsweise automatischen und berührungslosen Identifizieren eines Spülgutteils (2) vorzugsweise im Einstellbereich (4) der Spülmaschine (1) aufweist; und/oder
wobei das System (7) zur Spülgutidentifizierung eine Barcodelese-Einrichtung zum vorzugsweisen automatischen und berührungslosen Identifizieren eines Spülgutteils (2) vorzugsweise im Einstellbereich (4) der Spülmaschine (1) aufweist; und/oder
wobei das System (7) zur Spülgutidentifizierung eine Laserscanner-Einrichtung zum vorzugsweisen automatischen Erfassen mindestens eines für ein Spülgutteil (2) charakterisierenden oberflächenspezifischen Merkmals und somit zum berührungslosen Identifizieren des Spülgutteils (2) vorzugsweise im Einstellbereich (4) der Spülmaschine (1) aufweist; und/oder
wobei das System (7) zur Spülgutidentifizierung eine QR-Codelese-Einrichtung zum vorzugsweisen automatischen und berührungslosen Identifizieren eines Spülgutteils (2) vorzugsweise im Einstellbereich (4) der Spülmaschine (1) aufweist; und/oder
wobei das System (7) zur Spülgutidentifizierung eine insbesondere auf dem YUV-Farbmodell basierende Identifizierungs-Einrichtung zum vorzugsweisen automatischen und berührungslosen Identifizieren eines Spülgutteils (2) vorzugsweise im Einstellbereich (4) der Spülmaschine (1) aufweist.

9. Spülmaschine (1) nach Anspruch 7 oder 8,
wobei das System (7) zur Spülgutidentifizierung ausgebildet ist, vorzugsweise automatisch oder wahlweise automatisch mindestens ein Merkmal eines im Einstellbereich (4) der Spülmaschine (1) aufgegebenen Spülgutteils (2) zu erfassen, und wobei das System (7) zur Spülgutidentifizierung ferner ausgebildet ist, anhand des mindestens einen im Einstellbereich (4) der Spülmaschine (1) erfassten Merkmals das entsprechende Spülgutteil (2) im Entnahmebereich (5) der Spülmaschine (1) wiederzuerkennen und vorzugsweise entsprechend zu kennzeichnen oder von anderen Spülgutteilen (2) im Entnahmebereich (5) zu individualisieren, herauszustellen oder zu separieren.

10. Spülmaschine (1) nach einem der Ansprüche 1 bis 9,
wobei die mindestens eine Behandlungszone (3) ausgebildet ist, zeitlich gesehen nacheinander mindestens ein über die mindestens eine Transportvorrichtung (6) der mindestens einen Behandlungszone (3) zugeführtes Spülgutteil (2) einer Waschbehandlung und einer nachgeordneten Klarspülbehandlung sowie optional einer der Klarspülbehandlung nachgeordneten Trocknung zu unterwerfen.

11. Spülmaschine (1) nach einem der Ansprüche 1 bis 9,
wobei die Spülmaschine (1) mindestens eine erste Behandlungszone (3) aufweist, welche als Waschzone ausgebildet ist, und mindestens eine der mindestens einen ersten Behandlungszone (3) - in Transportrichtung der Spülgutteile (2) gesehen - nachgeschaltete zweite Behandlungszone (3) aufweist, welche als Spülzone, insbesondere Klarspülzone, ausgebildet ist, wobei optional die Spülmaschine (1) ferner mindestens eine dritte Behandlungszone (3) aufweist, welche als Trocknungszone ausgebildet und der mindestens einen zweiten Behandlungszone (3) - in Transportrichtung der Spülgutteile (2) gesehen - nachgeschaltet ist.

12. Spülmaschine (1) nach einem der Ansprüche 1 bis 9,
wobei der mindestens einen Behandlungszone (3) eine Absaugeinrichtung zum Absaugen von Wrasen zugeordnet ist; und/oder wobei der mindestens einen Behandlungszone (3) ein Spritzschutz (9) zugeordnet ist zum Verhindern eines Austritts von Wrasen und/oder Flüssigkeit aus der mindestens einen Behandlungszone (3).

13. Spülmaschine (1) nach einem der Ansprüche 1 bis 12,
wobei die Spülmaschine (1) eine weitere Transportvorrichtung (6) aufweist zum vorzugsweise automatischen und insbesondere bedarfsweisen Transportieren eines gereinigten Spülgutteils (2) vom Entnahmebereich (5) der Spülmaschine (1) zu einem Dispenser, insbesondere zu einem Dispenser für ein Kalt- oder Warmgetränk eines Getränkeautomaten oder einer Kaffeemaschine, wobei die Spülmaschine (1) insbesondere ferner einer Einrichtung zum Positionieren und/oder Ausrichten des Spülgutteils (2) mit Bezug auf den Dispenser aufweist; und/oder
wobei der Spülmaschine (1) ein Pfandsystem zugeordnet ist, zum Rückführen eines in den Einstellbereich (4) der Spülmaschine (1) eingegebenen oder einzugebenden Spülgutteils (2) insbesondere an den Betreiber der Spülmaschine (1) oder zum Wiederverwenden des in den Einstellbereich (4) der Spülmaschine (1) eingegebenen oder einzugebenden Spülgutteils (2).

14. Spülmaschine nach einem der Ansprüche 1 bis 13,
wobei die Spülmaschine insbesondere als Untertisch- oder Auftischmaschine ausgeführt und eine an eine Thekengröße angepasste Abmessung aufweist, wobei die Grundfläche der Spülmaschine (1) vorzugsweise eine Abmessung von maximal 700 mm x 1.000 mm und vorzugsweise maximal 500 mm x 600 mm und noch bevorzugter maximal 350 mm x 600 mm aufweist.

15. Spülmaschine nach einem der Ansprüche 1 bis 14,
wobei die Spülmaschine insbesondere eine Tür (8), vorzugsweise in Gestalt einer Tambour-Tür aufweist zum bedarfsweisen Verschließen einer Zugangsöffnung zum Einstellbereich (4) der Spülmaschine (1), wobei die Zugangsöffnung eine Höhe von maximal 300 mm und vorzugsweise von maximal 250 mm und eine Breite von maximal 500 mm und vorzugsweise von maximal 350 mm aufweist, wobei die Spülmaschine vorzugsweise eine erste Tür (8), vorzugsweise in Gestalt einer Tambour-Tür aufweist zum bedarfsweisen Verschließen der Zugangsöffnung zum Einstellbereich (4) der Spülmaschine (1) und vorzugsweise ferner eine zweite Tür (8), vorzugsweise in Gestalt einer Tambour-Tür aufweist zum bedarfsweisen Verschließen einer Zugangsöffnung zum Entnahmebereich (5) der Spülmaschine (1).
